# EUROPEAN PATENT SPECIFICATION

(11) **EP 1 033 723 B1**
(45) Date of publication and mention of the grant of the patent: **16.03.2005**
(21) Application number: 00300310.0
(22) Date of filing: 18.01.2000
(51) Int. Cl.: G21C 3/62, G21C 3/28

(54) **Nuclear fuel pellets and nuclear fuel rod containing same**
Kernbrennstofftabletten und Kernbrennstab mit solchen Tabletten
Pastilles de combustible nucléaire et crayon de combustible nucléaire avec des telles pastilles

(30) Priority: 18.01.1999 JP 975299
(43) Date of publication of application: 06.09.2000
(73) Proprietor: Mitsubishi Heavy Industries, Ltd., Tokyo (JP); Mitsubishi Nuclear Fuel Co., Ltd., Naka-gun, Ibaraki-ken (JP)
(72) Inventor: Senda, Yasuhide, c/o Takasago Res.&Dev.Center, Takasago, Hyogo-ken (JP); Monaka, Kazuki, c/o Kobe Shipyard & Mach.Works, Hyogo-ku, Kobe, Hyogo-ken (JP); Ohmuta, Hirofumi, c/o Mitsubishi Nuclear Fuel Co., Naka-gun, Ibaraki-ken (JP); Mori, Masaki, c/o Mitsubishi Nuclear Fuel Co., Naka-gun, Ibaraki-ken (JP)
(74) Representative: Perkins, Sarah

(56) References cited:
- EP-A- 0 329 452
- EP-A- 0 588 624
- DE-A- 3 148 136
- US-A- 3 365 371
- US-A- 3 801 451
- US-A- 4 671 927
- US-A- 4 822 559

## Description

The present invention relates to nuclear fuel rods for a fuel assembly to be used in a nuclear reactor and nuclear fuel pellets contained in the nuclear fuel rod, and in particular, relates to the outer shape of the nuclear fuel pellets.

In a fuel assembly for use in a pressurized water reactor, as is well known in the art, a skeleton structure comprises a lower and upper nozzle, a plurality of support grids disposed between the lower and upper nozzles with spaces between one another in the axial direction, and a plurality of control rod guide thimbles each extending from the lower nozzle to the upper nozzle through the grids. The fuel rods are laterally supported by each of the grids, while the upper and lower ends thereof are spaced a small distance apart from the upper and lower nozzles, respectively.

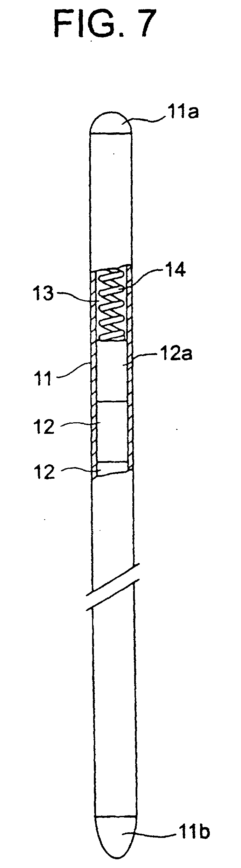

An example of fuel rods for such a fuel assembly is shown in Fig. 7. As shown in Fig. 7, a fuel rod 10 comprises a number of nuclear fuel pellets 12 stacked longitudinally on one another in an elongated cladding tube 11, the upper and lower ends of which are closed with an upper end plug 11a and a lower end plug 11b, respectively. In the cladding tube 11, a coil spring 14 is disposed in addition to the fuel pellets 12, and this coil spring 14 in a plenum 13 abuts an uppermost nuclear fuel pellet 12a thereby pressing the pellets downwards from above. Since the nuclear fuel pellets 12 discharge radioactive gaseous products during operation of the reactor, the volume of the plenum 13 is determined from the viewpoint of preventing excessive increases in internal pressure. Nevertheless, depending on the total length of the nuclear fuel pellets 12, the length of the plenum 13 may sometimes be greater than the required design length when the nuclear fuel pellets are stacked in the fuel rod. Thus, it is necessary to also prepare different pellets having a length smaller than that of the above-described ordinary nuclear fuel pellets 12 in order to adjust the volume of the plenum and incorporate them into the fuel rod.

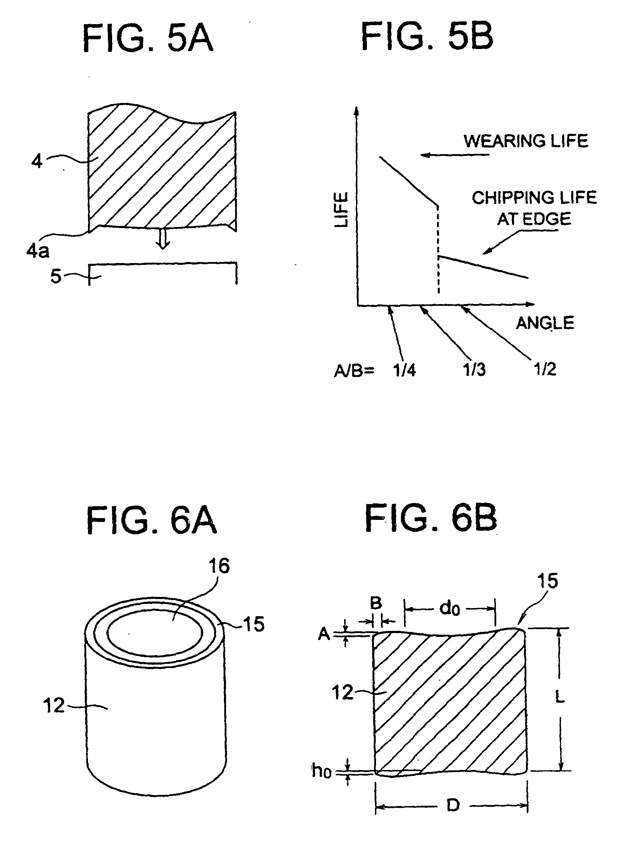

Figs. 6A and 6B show perspective and cross sectional views, respectively, of a conventional nuclear fuel pellet as, for example, the one disclosed in EP-A-0 588 624. In Fig. 6A, the nuclear fuel pellet 12 produced by shaping and sintering a powdered fuel substance takes a substantially cylindrical shape and has an upper and lower end face spaced axially apart from each other. Each end face is chamfered at the outer periphery thereof to form a beveled portion 15 and a center portion of each end face is shaped into a dish-like depression. This depression is referred to as a dish 16.

Next, in Fig. 6B, the height of the nuclear fuel pellet 12 is designated by L, the diameter thereof by D, the axial dimension of the beveled portion 15 by A, the radial dimension thereof by B, the diameter of the dish 16 by d₀⁻ and the depth thereof by h₀. Conventionally, the ratio of the axial dimension A of the beveled portion 15 to the radial dimension B (expressed as A/B) is typically about 1/2, and the height h₀ of the dish 16 is about 0.22 to about 0.26 mm but may vary depending on the type of fuel rod (in particular, the diameter thereof) to be used in a nuclear power plant.

The length L (the maximum dimension in the axial direction) of the nuclear fuel pellet is determined based on the volume of the shaping/sintering furnace, plenum volume reserve after the nuclear fuel pellets are stacked in a fuel rod, and suppression of PCMI (Pellet Clad Mechanical Interaction). Currently, nuclear fuel pellets having a length/diameter ratio (hereinafter referred to as ratio L/D) of about 1.2 are used.

A larger dish 16 in a nuclear fuel pellet is preferred from the viewpoint of suppressing pellet clad mechanical interaction (hereinafter, referred to, as PCMI), described above, and for preventing the pellet from becoming chipped. If it becomes excessively large, however, force is liable to be applied to an end edge of the pellet during manufacture thereof, thereby inducing so-called capping, to the effects that normal productivity cannot be expected. Since a smaller length/diameter ratio L/D of a pellet is preferred to address PCMI (in other words, the relationship between the permanent elongation of a fuel element and the ratio L/D is known to represent the magnitude of the PCMI phenomenon and the fuel rod shows a smaller elongation with a smaller length/diameter ratio L/D of the pellet), as described above, the ratio L/D is about 1.2. It has been found, however, that the frequency of bowing of the fuel rod increases at this ratio, and hence, from the viewpoint of preventing bowing of the fuel rod, such a small ratio is not optimal.

Moreover, the term "capping" means the phenomenon wherein when powdered material is compressed and shaped, crack-like flaws develop circumferentially in a peripheral surface near an end face, thereby making it difficult to perform uniform compression and shaping. When the chipping is extremely severe, an end sometimes peels off.

Furthermore, it is known that the shaping pressure is proportional to the weight of powdered material to be shaped (wherein the slope of a proportional straight line varies depending on the type of powdered material and the lubricating conditions) it is therefore understood that the shaping pressure is proportional to the length/diameter ratio L/D when the length/diameter ratio L/D is varied while the diameter D is kept constant. An increase in the ratio L/D leads, therefore, to an increase in shaping pressure, resulting in an increase in the frequency of capping occurring upon shaping. Moreover, when the shaping pressure exceeds a certain threshold, chipping during shaping occurs often. Furthermore, although the rigidity of the fuel rod becomes larger and more effective to prevent bowing the increase in the ratio L/D results in increase in the frequency of PCMI.

Thus, the outer dimensions of a conventional nuclear fuel pellet might have been determined as preferable values so far as certain properties of the nuclear fuel pellet are concerned. However, taking into consideration the process of manufacturing nuclear fuel pellets, they cannot necessarily be said to have been determined as optimal values. Accordingly, there has been a strong desire for improvement.

Therefore, an object of the present invention is to provide a nuclear fuel pellet fulfilling the above requirements. To achieve this object, the invention resides in a nuclear fuel pellet composed of a cylindrical body having a diameter D and a length L, wherein on an upper and lower end face of the cylindrical body a beveled portion having an axial dimension A along an axis of said cylindrical body and a radial dimension B perpendicular to the axis is formed at an outer peripheral edge and a dish having a diameter d₀ and a depth h₀ is formed coaxially with the longitudinal axis and wherein the diameter d₀ of the dish is set to 70 to 78% of the diameter D of the cylindrical body.

In the nuclear fuel pellet, it is preferable that a ratio A/B of the axial dimension A to the radial dimension B of the beveled portion be within a range of from 1/3 to 1/4.

Further, it is advantageous that a ratio L/D of the length L to the diameter D of the cylindrical body be within the range of from 1.3 to 1.5. It is more advantageous that the depth h₀ of the dish is 0.22 mm or less.

Furthermore, the present invention provides a fuel rod containing therein only nuclear fuel pellets having the ratio L/D of the length L to the diameter D of their cylindrical bodies in the range of from 1.3 to 1.5.

The present invention will be described in conjunction with illustrative embodiments shown in the accompanying drawings, in which:
Fig. 1A is a perspective view showing a nuclear fuel pellet according to the present invention;
Fig. 1B is a cross sectional view of the nuclear fuel pellet taken along an axis thereof;
Fig. 2 is a diagram for illustrating an interaction between a nuclear fuel pellet and a cladding tube in relation to radial temperature distribution in the nuclear fuel pellet;
Fig. 3 is a graph illustrating experimental results of the relationship between the elongation differential between the nuclear fuel pellets and the cladding tube (PCMI) and the diameter of the dish;
Fig. 4 is a graph illustrating experimental results of the interaction between the nuclear fuel pellets and the cladding tube;
Fig. 5A is a diagram illustrating the state of pressing a pellet with a pellet forming die;
Fig. 5B is a graph illustrating the relationship between the angle at an edge portion and the service life of the die;
Fig. 6A is a perspective view of a conventional nuclear fuel pellet;
Fig. 6B is a cross sectional view of the conventional nuclear fuel pellet taken along the longitudinal axis thereof; and
Fig. 7 is a partially broken side elevational view showing a fuel rod loaded with the nuclear fuel pellet shown in Fig. 6A.

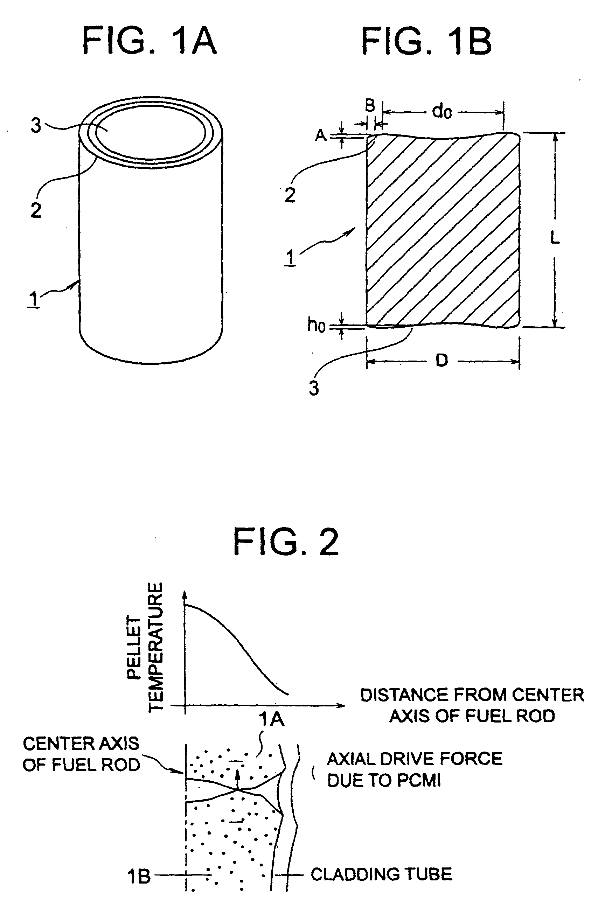

Now, a preferred embodiment of the present invention will be described in detail with reference to the accompanying drawings, in which the same numerals indicate the same or corresponding parts. As in Fig. 6 concerning the prior art, Fig. 1A is a perspective view showing a nuclear fuel pellet of an embodiment according to the present invention and Fig. 1 b is a cross sectional view taken along the longitudinal axis of the nuclear fuel pellet.

In Fig. 1A, a pellet 1 is composed of a cylindrical body as in the prior art. The cylindrical body has a beveled portion 2 on each periphery of the upper and lower end faces thereof. At the center of each end face, there is a dish 3 depressed inwardly in the axial direction. The center of the dish 3 coincides with the longitudinal axis of the pellet 1. The height and the diameter of the nuclear fuel pellet 1, the axial and radial dimension of the beveled portion 2, and the diameter and the depth of the dish 3 are designated by reference characters L, D, A, B, d₀ and h₀ , respectively.

According to an embodiment of the present invention, the ratio A/B is approximately 1/3 to 1/4 and the depth h₀ is a value smaller than the conventional one, i.e., 0.22 mm or less. The ratio L/D is set to approximately 1.3 to 1.5 in consideration of sintering furnace conditions and requirements for securing a plenum volume in the fuel rod and is preferably approximately 1.4.

The above-mentioned nuclear fuel pellets according to the present invention are stacked up in the axial direction in a cladding tube of a fuel rod as shown in Fig. 7. Such fuel rods are assembled into a fuel assembly, which is then loaded into a nuclear reactor and used for burnup. Fig. 2 is a diagram illustrating the state of deformation of an upper pellet 1A and a lower pellet 1B at their contact surfaces in a fuel rod during operation of a nuclear reactor. As for the deformation of a dish end, a pellet portion at a position where the diameter of the dish is large has a smaller thermal expansion in the axial direction and it is therefore understood that the interaction between the cladding tube and the pellet decreases.

To obtain a pellet in a state where it is insertable into a fuel rod, a powdered fuel substance is shaped into a cylindrical body and a number of such cylindrical bodies are accommodated in a piled state in a sintering boat and sintered in a sintering furnace and finally shaped into the nuclear fuel pellet 1. In actual circumstances, the shape and size of the sintering boat are determined based on the size of the sintering furnace in order to efficiently sinter nuclear fuel pellets in the sintering furnace and to prevent an approach to criticality.

For this reason, when just shaped green pellets are stacked up in the sintering boat, sometimes an unused space appears in the sintering boat depending on the value of the ratio L/D of the nuclear pellet. It has been found, however, that setting the ratio L/D in a range of from approximately 1.3 to 1.5, preferably approximately 1.4 makes it possible to efficiently utilize the volume in the sintering boat for stacking. Furthermore, setting the ratio L/D to the above value decreases the number of nuclear fuel pellets to be inserted in a fuel rod. This not only simplifies the loading work but also increases the rigidity of the fuel rod during operation to prevent bowing of the fuel rod.

Furthermore, it is known that the temperature of a pellet in the fuel rod during operation of a nuclear reactor is lower at positions which are radially farther from the center axis of the pellet. Therefore, setting the diameter d₀ of the dish 3 at 70% to 78% of the pellet diameter D shifts the dish end towards the periphery, where the temperature is lower than in a conventional one. This reduces axial thermal deformation at the ends, where the end faces of adjacent upper and lower nuclear fuel pellets potentially interfere with each other, to thereby decrease the degree of interaction between the cladding tube and the pellet and decrease the degree of bowing of the fuel rod.

Setting the ratio A/B to approximately 1/3 to 1/4 allows a smaller angle at an edge portion of a pellet forming die to thereby prolong the service life of the die. Fig. 5A illustrates the state where a pellet forming die 4 presses a pellet 5 and Fig. 5B is a diagram illustrating experimental results showing the relationship between the service life of a die and the ratio A/B. In general, the hard metal material forming the die 4 has a high Young's modulus, so that the portion of the die corresponding to the beveled portion 2 of the pellet (See Figs. 1A and 1B.), i.e., an edge portion 4a, abruptly tends to be chipped off when the degree of its downward angle exceeds a certain value. This value may vary depending on the pressure, etc. used for shaping, and the tests revealed that as the angle becomes such that the ratio A/B exceeds 1/3 and approaches 1/2, the service life of the die becomes limited due to chipping off at the edge portion 4a. On the other hand, when the depth h₀ of the dish is decreased and the diameter d₀ increased to make the radius of curvature of the dish larger, the compactibility and PCMI resistance properties of the pellet are improved.

From the viewpoint of longer service life of the pellet shaping die 4, it is desirable that the ratio A/B of the beveled portion 2 be smaller. On the other hand, it is necessary that the irradiation behavior of the fuel rod be kept at the same level as that of the current pellet and that the dish diameter be determined such that the free volume inside the fuel rod is equivalent to that in a current rod. Further, the width of a land portion outside the dish must be determined so as not to harm stability when seating adjacent pellets. Taking this into consideration, the ratio A/B of the beveled portion 2 is set to approximately 1/3 to 1/4.

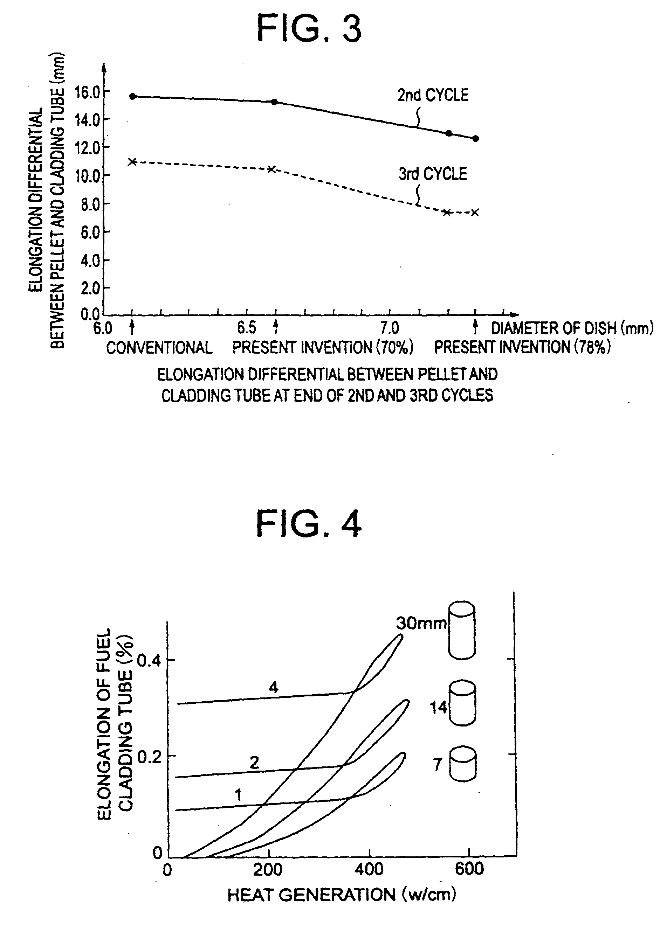

Fig. 3 illustrates experimental results of the relationship between variation of the dish diameter d₀ relative to its initial value in the cycle and the elongation differential (mm) between the pellet and cladding tube. It is apparent that when the dish diameter d₀ comes to exceed approximately 70% of the pellet diameter D, the elongation difference that represents an axial drive force caused by PCMI starts to significantly decrease. As a result, PCMI decreases. On the other hand, regarding the ratio of the dish diameter d₀ to the pellet diameter D by itself, the larger the ratio, the better the results. However, the necessity of providing the beveled portion 2 sets an upper limit of 78%.

The elongation differential generated by thermal expansion of the pellets and the cladding tube decreases as the diameter of the dish d₀ becomes greater, as described above. Moreover, when case the cladding tube and the pellets are in contact with each other, bowing of the fuel rod due to differences in thermal expansion becomes smaller as the difference in thermal expansion between the two becomes smaller. Analytical evaluations on the differences in thermal expansion between the pellets and cladding tube with the diameter of the dish d₀ as a parameter were performed on pellets for 14×14 type, 15×15 type and 17×17 type fuel assemblies under the three conditions of the ratio d₀/D, 78 %, 77 %, and 71 % as well as 76 %, 74 %, and 70 %, respectively. As a result, it became apparent that in any case, the difference in thermal expansion could be decreased compared with those having current pellet specifications. As a result of the analytical evaluation of the influence of the decreasing effect on bowing of the fuel rod, it was demonstrated that in each of the above three conditions of d₀/D, a bending decreasing effect was obtained at the same level. The following Table 1 shows the parameters of pellets used for the analytical evaluation. From the above, it can be seen that setting the ratio d₀/D in the range of 70 % to 78 % significantly decreases bowing of the fuel rod.

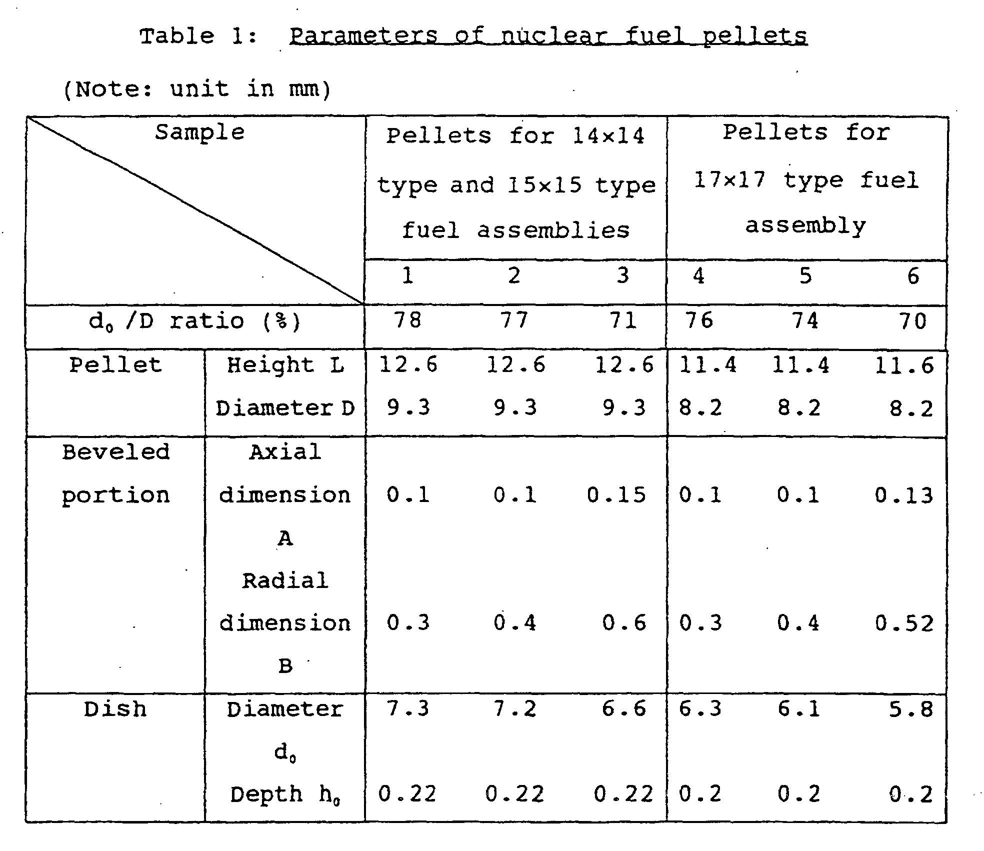

According to the present invention, since the diameter of the dish d₀ is set at a minimum of 70% of the pellet diameter D, the radius of curvature of the dish 3 becomes larger. As the radius of curvature becomes larger and the depth h₀ of the dish becomes smaller, and unevenness in the entire configuration of the pellet becomes smaller. Therefore, the pressure used during shaping of the pellet becomes uniform over the entire pellet, thereby improving the compactibility of the pellet.

Fig. 4 illustrates experimental results of PCMI of a fuel rod provided with pellets of various L/D ratios, the vertical axis indicating an elongation (%) of a fuel cladding tube for fuel and the horizontal axis indicating heat generation (w/cm) based on the length of the fuel rod. Note that in Fig. 4, the numbers "1", "2", and "4" shown near the substantially horizontal linear portions of the three curved lines indicate the number of fuel rods used in the experiment. The pellets provided in the respective fuel rods "1", "2", and "4" are illustrated in the upper right of the graph and have diameters of 13.9 mm and lengths of 7, 14, and 30 mm, respectively.

As described above, according to the invention, the pellet end face portion defining an outer periphery of the dish is shifted towards the periphery, thereby reducing the axial thermal deformation of the pellet near the end face. Thus PCMI is suppressed and bowing of the fuel rod is prevented, which improves their reliability.

Further, according to the invention, the ratio A/B of the axial dimension A to the radial dimension B of the beveled portion remains in the range of from 1/3 to 1/4, such that the angle of an edge portion of a pellet forming die can be set smaller to thereby prolong the service life of the die. Thus productivity of the pellets is improved.

Furthermore, according to the invention, the ratio L/D of the length L to the diameter D of the cylinder remains in the range of from 1.3 to 1.5, such that the volume of the sintering boat can be efficiently utilized when sintering green pellets are placed therein and the number of pellets to be incorporated into a fuel rod can be decreased. Thus productivity and workability are improved. In addition, fuel rods loaded with the pellets have increased rigidity and are prevented from bowing.

Moreover, according to the invention, the diameter of the dish is enlarged and the depth h₀ of the dish is 0.22 mm or less, as long as the axial thermal deformation in the central portion of the pellet can be accommodated. Thus, the radius of curvature of the dish is increased such that nuclear fuel pellets having excellent compactibility and high PCMI resistance properties can be provided.

Furthermore, use of nuclear fuel pellets in the configured as described above makes it possible to provide only one type of nuclear fuel pellet to be loaded in a fuel rod, thus contributing to reducing the production costs of the fuel rods.

## Claims

1. A nuclear fuel pellet composed of a cylindrical body having a diameter D and a length L, wherein on an upper and lower end face of the cylindrical body a beveled portion having an axial dimension A along an axis of said cylindrical body and a radial dimension B perpendicular to the axis is formed at an outer peripheral edge and a dish having a diameter d₀ and a depth h₀ is formed coaxially with the longitudinal axis **characterised in that** the diameter d₀ of the dish is set to 70 % to 78 % of said diameter D of the cylindrical body.

2. The nuclear fuel pellet as described in claim 1, **characterized in that** a ratio A/B of the axial dimension A to the radial dimension B of the beveled portion is within the range of 1/3 to 1/4.

3. The nuclear fuel pellet as described in claim 1 or 2, **characterized in that** a ratio L/D of the length L to the diameter D of the cylindrical body is within the range of from 1.3 to 1.5.

4. The nuclear fuel pellet as described in claim 3, **characterized in that** the depth h₀ of the dish is 0.22 mm or less.

5. A fuel rod wherein each nuclear fuel pellet provided therein is a pellet as described in claim 3.

## Patentansprüche

1. Kernbrennstoffpellet, bestehend aus einem zylindrischen Körper mit einem Durchmesser D und einer Länge L, wobei auf einer oberen und unteren Stirnfläche des zylindrischen Körpers ein abgeschrägter Teil mit einer axialen Abmessung A entlang einer Achse des zylindrischen Körpers und einer radialen Abmessung B rechtwinklig zu der Achse an einer äußeren peripheren Kante ausgebildet ist, und ein Teller mit einem Durchmesser d₀ und einer Tiefe h₀ koaxial mit der Längsachse ausgebildet ist, **dadurch gekennzeichnet, dass** der Durchmesser d₀ des Tellers auf 70 % bis 78 % des Durchmessers D des zylindrischen Körpers eingestellt ist.

2. Kernbrennstoffpellet, wie in Anspruch 1 beschrieben, **dadurch gekennzeichnet, dass** ein Verhältnis A/B der axialen Abmessung A zu der radialen Abmessung B des abgeschrägten Teils im Bereich von 1/3 bis 1/4 liegt.

3. Kernbrennstoffpellet, wie in Anspruch 1 oder 2 beschrieben, **dadurch gekennzeichnet, dass** ein Verhältnis L/D von der Länge L zu dem Durchmesser D des zylindrischen Körpers im Bereich von 1,3 bis 1,5 liegt.

4. Kernbrennstoffpellet, wie in Anspruch 3 beschrieben, **dadurch gekennzeichnet, dass** die Tiefe h₀ des Tellers 0,22 mm oder weniger ist.

5. Brennstab, worin jedes Kernbrennstoffpellet, das darin bereitgestellt wird, ein wie in Anspruch 3 beschriebenes Pellet ist.

## Revendications

1. Pastille de combustible nucléaire constituée d'un corps cylindrique d'un diamètre D et d'une longueur L, où sur des faces d'extrémité supérieure et inférieure du corps cylindrique, une portion biseautée présentant une dimension axiale A le long d'un axe dudit corps cylindrique et une dimension radiale B perpendiculaire à l'axe est formée à un bord périphérique extérieur, et une cuvette d'un diamètre dₒ et d'une profondeur hₒ est formée coaxialement à l'axe longitudinal, **caractérisée en ce que** le diamètre dₒ de la cuvette est établi à 70% jusqu'à 78% dudit diamètre D du corps cylindrique.

2. Pastille de combustible nucléaire selon la revendication 1, **caractérisée en ce qu'**un rapport A/B de la dimension axiale A à la dimension radiale B de la portion biseautée se situe dans la plage de 1/3 à 1/4.

3. Pastille de combustible nucléaire selon la revendication 1 ou 2, **caractérisé en ce qu'**un rapport L/D de la longueur L au diamètre D du corps cylindrique se situe dans la plage de 1,3 à 1,5.

4. Pastille de combustible nucléaire selon la revendication 3, **caractérisée en ce que** la profondeur hₒ de la pastille est de 0,22 mm ou moins.

5. Crayon de combustible, dans lequel chaque pastille de combustible nucléaire introduite est une pastille telle que décrite dans la revendication 3.
